# EUROPEAN PATENT SPECIFICATION

(11) **EP 4 161 709 B1**
(45) Date of publication and mention of the grant of the patent: **09.04.2025**
(21) Application number: 21728800.0
(22) Date of filing: 08.06.2021
(51) Int. Cl.: B07C 5/342, B07C 5/02

(54) **GRAIN SORTING PROCESS AND APPARATUS**
VERFAHREN UND VORRICHTUNG ZUM SORTIEREN VON GETREIDE
PROCÉDÉ ET DISPOSITIF DE TRI DES CÉRÉALES

(30) Priority: 08.06.2020 GB 202008617
(43) Date of publication of application: 12.04.2023
(73) Proprietor: Minch Malt Limited, Athy Kildare (IE)
(72) Inventor: ZSOLDOS, Peter, Colchester Essex CO4 6DP (GB); CALUSIC, Ivan, 35403 Resetari (HR)
(74) Representative: Schütte, Gearoid
(86) International application number: PCT/EP2021/065359
(87) International publication number: WO 2021/250041

(56) References cited:
- EP-A1- 3 604 178
- WO-A1-2009/063023
- WO-A1-2013/175870
- US-A1- 2013 168 301
- US-A1- 2017 275 100

## Description

### Introduction

This invention relates to a grain sorting process. In particular, the present invention relates to an apparatus and a process for in-line sorting of cereal grains, at industrial capacity (100t/h), ensuring individual storage based on a selected parameter of the cereal grain considered for sorting.

### Background of the Invention

Cereal acceptance criteria for use in different industries require the measurement of a number of parameters of the cereal grains. This allows the identification of the most suitable cereal grain batches as well as the storage and subsequent use of homogenous cereal grain batches.

Some current solutions offered to industries to measure quality parameters for the cereals are based mainly on individual sampling of each bulk load of cereal grains received, followed by its measurement with laboratory equipment. Certain companies have developed methods and devices able to measure higher amounts of cereals, but a limiting factor remains the capacity that is able to be processed with such equipment. Solutions have been offered by different companies for in-line measurement of different cereal parameters which either have a limited capacity of the system, and as such are not suitable for production scale, or the values measured are only collected for information purposes, without any action for separation into different cereal grain batches based on the quality of the cereal grain.

US 2013/168301 A1 discloses an apparatus and method for sorting of particles such as seeds, grains and the like. Patent No. US 4,057,146 A discloses an optical sorting apparatus for beans or grains which provides sorting on the basis of size and colour. US 5,779,058 A discloses a colour sorting apparatus for grains.

A grain sorting process and apparatus is described in our US Patent No. US 8,569,644 for analysing grain in-line and separating grain into batches on the basis on one or more sensed parameter values, such as protein content or moisture content for example. The separation process separates the grain into homogenous batches which is desirable for subsequent processing of the grain. It is an object of the present invention to provide an improved process and apparatus of this type.

WO-A-2009/063023 discloses a process in accordance with the preamble of claim 1 and an apparatus in accordance with the preamble of claim 2.

### Summary of the Invention

According to the invention, there is provided a process for analysing bulk quantities of grain in-line and separating the grain into batches, each batch corresponding to at least one pre-selected grain parameter value, the processing including:
delivering the grain continuously past an in-line measurement station,
analysing the grain by emitting light onto the grain passing the in-line measurement station and detecting the light reflected from the grain to provide a spectrum of the grain, converting the spectrum into the or each parameter value, and
separating the grain in-line into batches in response to the or each measured grain parameter value,
the process including controlling grain flow through the measurement station for forming an optically dense grain layer at the measurement station for reflecting the light emitted onto the grain,
characterised in that the process includes funnelling the grain for delivering the grain in an optically dense grain layer stream past a sensor unit at the measuring station, delivering the grain through an infeed chute having the sensor unit mounted at a side wall of the infeed chute at the measurement station, passing grain delivered through the infeed chute through a funnel mounted on the side wall at the sensor unit, forming the optically dense grain layer by means of the funnel and delivering the grain in an optically dense grain layer stream against the side wall past a sensing head of the sensor unit mounted on the side wall, channelling the grain between tapered funnel side walls projecting outwardly from the side wall of the grain infeed chute at which the sensor unit is mounted and between an angled guide flap and the chute side wall, the angled guide flap extending between the funnel side walls and spaced-apart from the chute side wall at which the sensor unit is mounted, said angled guide flap tapering inwardly from an inlet of the funnel towards the chute side wall on which the sensor unit is mounted.

In another aspect the invention provides apparatus for analysing bulk quantities of grain in-line and separating the grain into two or more batches in response to at least one sensed grain parameter value, the apparatus comprising:
a measurement station having a sensor unit;
means for delivering grain past the sensor unit in an optically dense grain layer;
a light emitter at the measurement station operable to emit light onto the optically dense grain layer for reflection back to the sensor unit;
the sensor unit for detecting light reflected from the grain to provide a spectrum;
means for converting the spectrum into at least one grain parameter value; and
means for separating the grain into two or more batches in response to the measured parameter value,
characterised in that the measurement station is mounted on a grain infeed chute, the measuring station having a sensor unit mounted at a side wall of the grain infeed chute, a funnel mounted within the grain infeed chute, the funnel comprising tapered funnel side walls projecting outwardly from the side wall of the grain infeed chute at which the sensor unit is mounted, an angled guide flap extending between the funnel side walls and spaced-apart from the chute side wall at which the sensor unit is mounted, said angled guide flap tapering inwardly from an inlet of the funnel towards the chute side wall on which the sensor unit is mounted.

In an embodiment, the angled guide flap is curved between an inlet end and an outlet end of the angled guide flap.

In another embodiment, the outlet ends of the tapered funnel side walls connect to a funnel neck portion having parallel neck walls extending outwardly from each funnel side wall.

In another embodiment, an outlet end of the angled guide flap extends partially into the funnel neck portion between the neck walls.

### Brief Description of the Drawings

The invention will be more clearly understood by the following description of some embodiments thereof, given by way of example only, with reference to the accompanying drawings, in which:
Fig. 1 is a schematic illustration of grain sorting apparatus for carrying out the process of the invention;
Fig. 2 is another schematic illustration of the grain sorting apparatus;
Fig. 3 is a schematic illustration of a measurement station forming portion of the apparatus;
Fig. 4 is another schematic illustration of the measurement station;
Fig. 5 is a perspective view showing apparatus for carrying out another grain sorting process of the invention;
Fig. 6 is a further perspective view of the apparatus shown in Fig. 5;
Fig. 7 is a detail diagrammatic illustration of portion of the apparatus shown in Fig. 5; and
Fig. 8 is a detail perspective view of portion of the apparatus shown in Fig. 5.

### Detailed Description of the Preferred Embodiments

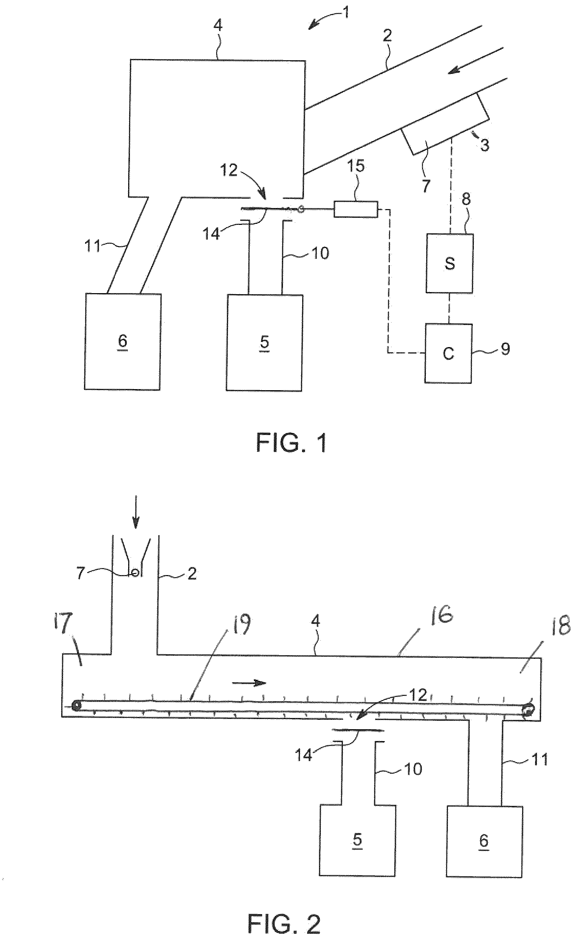

Referring to the drawings, and initially to Figs. 1 to 4 thereof, there is illustrated grain sorting apparatus according to the invention, indicated generally by the reference numeral 1. The apparatus 1 includes a grain infeed chute 2 for delivery of bulk cereal grain into the apparatus 1. An in-line measurement station 3 analyses selected parameters of grain delivered through the infeed chute 2 into the apparatus 1. The grain infeed chute 2 discharges onto a horizontal grain sorting conveyor 4 which discharges the grain into storage silos 5, 6 in response to one or more measured parameters of the grain determined at the measurement station 3.

The measurement station 3 has a sensor unit 7 which includes a near-infrared (NIR) light source for emitting light onto grain delivered through the grain infeed chute 2. The light is reflected from the grain and reflected light is detected by the sensor 7 to provide a spectrum of the grain. A spectrometer 8 connected to the sensor unit 7 converts the spectrum into one or more corresponding preselected grain parameter values. The grain parameter values generated by the spectrometer 8 are delivered to a controller 9. The controller 9 then controls operation of the sorting conveyor 4 in response to the measured grain parameter values to deliver the cereal grain into a storage silo 5, 6 having a grain parameter corresponding to the measured grain parameter.

Two storage silos 5, 6 are shown in Fig.1 and Fig. 2 by way of illustration, although it will be appreciated that any desired number of storage silos may be provided. Discharge chutes 10, 11 communicate between the sorting conveyor 4 and each silo 5, 6. An inlet 12 of the first discharge chute 10 has a slide plate 14 moveable by means of a pneumatic ram 15 between a closed position across the inlet 12, closing the inlet 12, and an open position to allow discharge of cereal grain from the sorting conveyor 4 through the discharge chute 10 and into the silo 5.

The second discharge chute 11, which is downstream of the first discharge chute 10, may be fitted with a similar slide plate or may be open as shown in Fig.2. Thus, when the slide plate 14 at the inlet 12 of the first discharge chute 10 is open, cereal grain is delivered to the first silo 5 and when the slide plate 14 is closed the cereal grain is delivered into the second silo 6. The controller 9 regulates operation of the slide plate 14 in response to sensed grain parameters to deliver the cereal grain into the required silo 5, 6 for collecting homogenous cereal grain in each silo 5, 6.

The sorting conveyor 4 has a box-section housing 16 with an inlet end 17 and an outlet end 18. A grain feed conveyor 19 is mounted within the housing 16 for delivery of grain through the hosing 16 between the inlet end 17 and outlet end 18 of the housing 16. Grain is discharged from the infeed chute 2 onto the grain feed conveyor 19 at the inlet end 17 of the housing 16 and is transported by the grain feed conveyor 19 to the outlet end 18 of the housing 16 for discharge through one of the discharge chutes 10, 11.

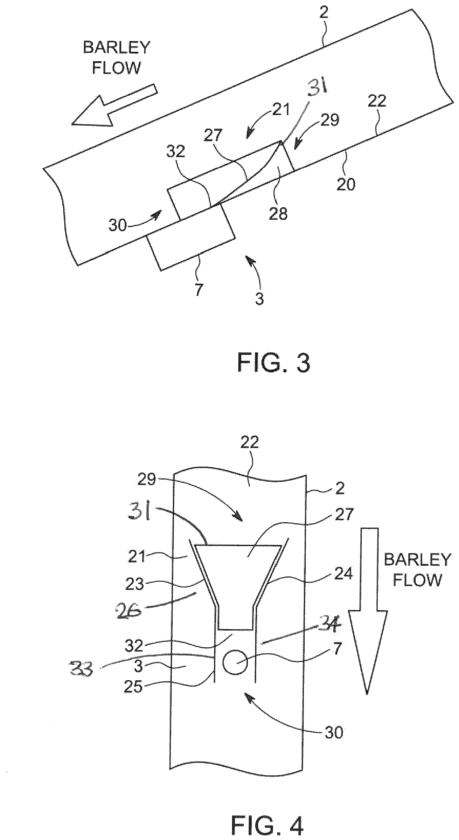

Referring in particular to Fig. 3 and Fig. 4, the in-line measurement station 3 is shown in more detail. In this case the sensor unit 7 is mounted on a bottom side wall 20 of the grain infeed chute 2. A funnel 21 is mounted within the infeed chute 2 in alignment with the sensor unit 7 to deliver a portion of the grain passing through the infeed chute 2 in an optically dense grain layer stream past the sensor unit 7. The optically dense grain layer stream is about 5cm deep against an inside face 22 of the bottom side wall 20 of the infeed chute 2.

The funnel 21 has an upper tapered portion 26 with inwardly tapered side walls 23, 24 leading to a lower narrowed neck portion 25 within which a sensing head of the sensor unit 7 is mounted. The funnel side walls 23, 24 and neck portion 25 project outwardly from the inside face 22 of the bottom side wall 20 of the chute 2. The neck portion 25 is formed by two spaced-apart substantially parallel neck walls 33, 34 extending outwardly and downwardly from each funnel side wall 23, 24 and forming extensions thereof.

In addition, an angled guide flap 27 narrows a grain passage 28 through the funnel 21 between an inlet 29 and an outlet 30 of the funnel 21. This provides a consistent depth of grain at the sensor unit 7 throughout delivery of cereal grain through the grain infeed chute 2 to promote sensor accuracy. The angled guide flap 27 extends between the funnel side wall 23, 24 and is spaced-apart from the bottom side wall 20 of the infeed chute 2. The angled guide flap 27 tapers inwardly from the inlet 29 of the funnel 21 towards the bottom side wall 20 of the infeed chute 2. An outlet end 32 of the flap 27 is spaced apart from the inside face 22 of the bottom side wall 20 of the grain infeed chute 2 by a required distance to produce a desired grain layer stream depth at the sensor unit 7, which in this case is about 5cm. The angled guide flap 27 may be straight or curved between an inlet end 31 and the outlet end 32 of the angled guide flap 27.

In use, grain is delivered through the infeed chute 2 past the in-line measurement station 3. The sensor unit 7 emits NIR light onto the grain delivered through the grain infeed chute 2. The light is reflected from the grain and reflected light is detected by the sensor 7 to provide a spectrum of the grain. The spectrometer 8 connected to the sensor unit 7 converts the spectrum into one or more corresponding preselected grain parameter values. The grain parameter values generated by the spectrometer 8 are delivered to the controller 9. The controller 9 then controls operation of the sorting conveyor 4 in response to the measured grain parameter values to deliver the cereal grain into a storage silo 5, 6 having a grain parameter corresponding to the measured grain parameter.

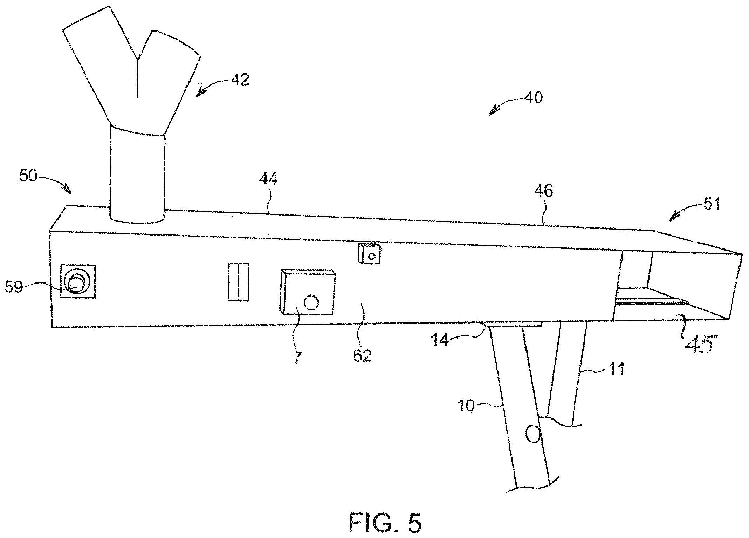

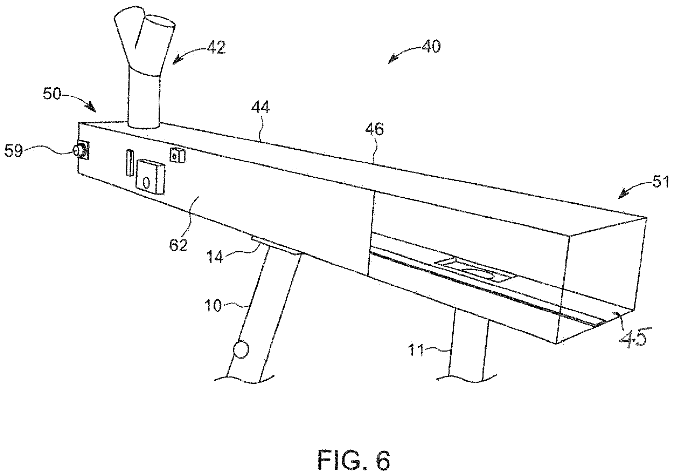

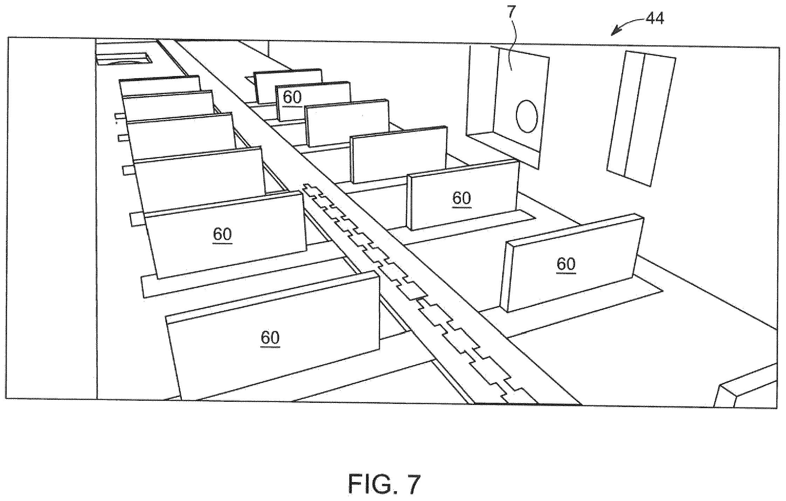

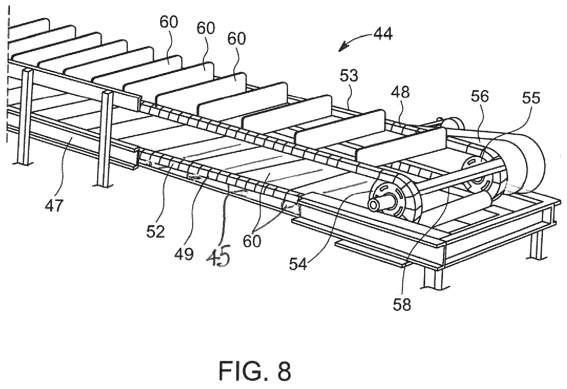

Referring now to Figs. 5 to 8, there is shown another grain sorting apparatus according to a second embodiment of the invention, indicated generally by the reference numeral 40. Parts similar to those described previously are assigned the same reference numerals. The apparatus 40 has a grain infeed chute 42 discharging to an inlet end 50 of a grain sorting conveyor 44. The grain sorting conveyor 44 has a box-section housing 46 at a bottom of which is mounted an elongate trough 47. A grain feed conveyor 48 is mounted within the housing 46 such that a lower pass 49 of the grain feed conveyor 48 is located in and travels along the trough 47 between the inlet end 50 and an outlet end 51 of the housing 46 for delivery of grain received from the infeed chute 42 at the inlet end 50 to the discharge chutes 10, 11 at the outlet end 51 of the housing 46.

The grain feed conveyor 48 has two spaced-apart parallel endless drive chains 52, 53 mounted on drive sprockets 54, 55 at the outlet end 51 of the housing 46. A drive mechanism 56 rotates the drive sprockets 54, 55 which are mounted on a drive shaft 58 drivably connected to the drive mechanism 56. Opposite ends of each drive chain 52, 53 are carried on associated rotatable sprockets (not shown) mounted on a rotatable shaft 59 at the inlet end 50 of the housing 46.

A plurality of spaced-apart scraper paddles 60 are mounted between the drive chains 52, 53. Each scraper paddle 60 extends substantially perpendicular to the direction of travel of the drive chains 52, 53. Grain delivered from the grain infeed chute 42 into the housing 46 collects in the trough 47 between scraper paddles 60 on the lower pass 49 of the grain feed conveyor 48 which project vertically upwardly from a bottom wall 45 of the trough 47 and is delivered along the trough 47 between the inlet end 50 and the outlet end 51 of the housing 46 by movement of the scraper paddles 60 along the trough 47.

In this case the sensor unit 7 is positioned on a side wall 62 of the housing 46. The depth of the scraper paddles 60 is such that the sensing head of the sensor unit 7 is fully covered by the depth of grain retained in the trough 47 between each adjacent pair of scraper paddles 60.

The process and apparatus of the invention is able to measure any desired grain parameter, such as protein content, moisture content, etc., of the cereal grain during intake of bulk cereal grain material. The intake of cereal grain is separated into quality groups based on the different measured levels of the parameter or parameters under consideration and each quality group is separated out in-line and stored in its own silo 5, 6 by the process and apparatus of the invention. Thus, the cereal grain is separated in-line into homogenous batches of cereal grain which ensures consistently high quality when the cereal grain is later processed.

It will be appreciated that the invention provides a process and apparatus for highspeed, non-destructive measurement in real time and providing a high level of measurement accuracy.

The sensor head of the sensor unit 3 is in direct contact with the cereal grain product and measures the required parameters using NIR technology. To ensure that the NIR sensor produces correct measured values, the measurements are taken in the compact product flow in which the cereal grains are closely packed together. The compact product flow is permanently illuminated with NIR light. The absorption behaviour and hence the spectrum of the reflected light changes depending on the concentration of the parameters in the passing cereal grain. Through comparison of the reflected light with a calibration database created with the help of a laboratory, the respective properties such as the protein content can be determined.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A process for analysing bulk quantities of grain in-line and separating the grain into batches, each batch corresponding to at least one pre-selected grain parameter value, the processing including:
delivering the grain continuously past an in-line measurement station (3),
analysing the grain by emitting light onto the grain passing the in-line measurement station (3) and detecting the light reflected from the grain to provide a spectrum of the grain,
converting the spectrum into the or each parameter value, and
separating the grain in-line into batches in response to the or each measured grain parameter value,
the process including controlling grain flow through the measurement station (3) for forming an optically dense grain layer at the measurement station (3) for reflecting the light emitted onto the grain,
**characterised in that** the process includes funnelling the grain for delivering the grain in an optically dense grain layer stream past a sensor unit (7) at the measurement station (3), delivering the grain through an infeed chute (2) having the sensor unit (7) mounted at a side wall (20) of the infeed chute (2) at the measurement station (3), passing grain delivered through the infeed chute (2) through a funnel (21) mounted on the side wall (20) at the sensor unit (7), forming the optically dense grain layer by means of the funnel (21) and delivering the grain in an optically dense grain layer stream against the side wall (20) past a sensing head of the sensor unit (7) mounted on the side wall (20), channelling the grain between tapered funnel side walls (23, 24) projecting outwardly from the side wall (20) of the grain infeed chute (2) at which the sensor unit (7) is mounted and between an angled guide flap (27) and the chute side wall (20), the angled guide flap (27) extending between the funnel side walls (23, 24) and spaced-apart from the chute side wall (20) at which the sensor unit (7) is mounted, said angled guide flap (27) tapering inwardly from an inlet (29) of the funnel (21) towards the chute side wall (20) on which the sensor unit (7) is mounted.

2. Apparatus (1) for analysing bulk quantities of grain in-line and separating the grain into two or more batches in response to at least one sensed grain parameter value, the apparatus comprising:
a measurement station (3) having a sensor unit (7);
means (21) for delivering grain past the sensor unit (7) in an optically dense grain layer;
a light emitter at the measurement station (3) operable to emit light onto the optically dense grain layer for reflection back to the sensor unit (7);
the sensor unit (7) for detecting light reflected from the grain to provide a spectrum;
means (8) for converting the spectrum into at least one grain parameter value; and
means (14) for separating the grain into two or more batches in response to the measured parameter value,
**characterised in that** the measurement station (3) is mounted on a grain infeed chute (2), the measurement station (3) having a sensor unit (7) mounted at a side wall (20) of the grain infeed chute (2), a funnel (21) mounted within the grain infeed chute (2), the funnel (21) comprising tapered funnel side walls (23, 24) projecting outwardly from the side wall (20) of the grain infeed chute (2) at which the sensor unit (7) is mounted, an angled guide flap (27) extending between the funnel side walls (23, 24) and spaced-apart from the chute side wall (20) at which the sensor unit (7) is mounted, said angled guide flap (27) tapering inwardly from an inlet (29) of the funnel (21) towards the chute side wall (20) on which the sensor unit (7) is mounted.

3. The apparatus (1) as claimed in claim 2, wherein the angled guide flap (27) is curved between an inlet end (31) and an outlet end (32) of the angled guide flap (27).

4. The apparatus (1) as claimed in claim 2 or claim 3, wherein the outlet ends of the tapered funnel side walls (23, 24) connect to a funnel neck portion (25) having parallel neck walls (33, 34) extending outwardly from each funnel side wall (23, 24).

5. The apparatus (1) as claimed in claim 4, wherein an outlet end (32) of the angled guide flap (27) extends partially into the funnel neck portion (25) between the neck walls (33, 34).

## Patentansprüche

1. Verfahren zum Inline-Analysieren großer Getreidemengen und zum Trennen des Getreides in Chargen, wobei jede Charge mindestens einem vorab ausgewählten Getreideparameterwert entspricht, wobei die Verarbeitung umfasst:
kontinuierliches Abgeben des Getreides an einer Inline-Messstation (3) vorbei,
Analysieren des Getreides durch Emittieren von Licht auf das Getreide, das die Inline-Messstation (3) passiert, und Erkennen des vom Getreide reflektierten Lichts, um ein Spektrum des Getreides bereitzustellen,
Umwandeln des Spektrums in den oder jeden Parameterwert und
Inline-Trennen des Getreides in Chargen als Reaktion auf den oder jeden gemessenen Getreideparameterwert,
wobei das Verfahren das Steuern des Getreideflusses durch die Messstation (3) zur Bildung einer optisch dichten Getreideschicht an der Messstation (3) zur Reflexion des auf das Getreide emittierten Lichts einschließt,
**dadurch gekennzeichnet, dass** das Verfahren einschließt: Trichtern des Getreides, um das Getreide in einem optisch dichten Getreideschichtstrom an einer Sensoreinheit (7) an der Messstation (3) vorbei abzugeben, Abgeben des Getreides durch einen Einfüllschacht (2) mit der Sensoreinheit (7), die an einer Seitenwand (20) des Einfüllschachts (2) an der Messstation (3) montiert ist, Leiten des durch den Einfüllschacht (2) abgegebenen Getreides durch einen Trichter (21), der an der Seitenwand (20) an der Sensoreinheit (7) montiert ist, Bilden der optisch dichten Getreideschicht mittels des Trichters (21) und Abgeben des Getreides in einem optisch dichten Getreideschichtstrom gegen die Seitenwand (20) vorbei an einem Sensorkopf der Sensoreinheit (7), die an der Seitenwand (20) montiert ist, Kanalisieren des Getreides zwischen verjüngten Trichterseitenwänden (23, 24), die nach außen von der Seitenwand (20) des Getreideeinfüllschachts (2) vorstehen, an der die Sensoreinheit (7) montiert ist, und zwischen einer abgewinkelten Führungsklappe (27) und der Schachtseitenwand (20), wobei die abgewinkelte Führungsklappe (27) zwischen den Trichterseitenwänden (23, 24) verläuft und von der Schachtseitenwand (20), an der die Sensoreinheit (7) montiert ist, beabstandet ist, wobei sich die abgewinkelte Führungsklappe (27) von einem Einlass (29) des Trichters (21) nach innen in Richtung der Schachtseitenwand (20), an der die Sensoreinheit (7) montiert ist, verjüngt.

2. Vorrichtung (1) zum Inline-Analysieren großer Getreidemengen und zum Trennen des Getreides in zwei oder mehr Chargen als Reaktion auf mindestens einen erkannten Getreideparameterwert, wobei die Vorrichtung umfasst:
eine Messstation (3) mit einer Sensoreinheit (7);
Mittel (21) zum Abgeben von Getreide an der Sensoreinheit (7) vorbei in einer optisch dichten Getreideschicht;
einen Lichtemitter an der Messstation (3), der betriebsfähig ist, Licht auf die optisch dichte Getreideschicht zu emittieren, um es zurück zur Sensoreinheit (7) zu reflektieren;
die Sensoreinheit (7) zum Erkennen des vom Getreide reflektierten Lichts, um ein Spektrum bereitzustellen;
Mittel (8) zum Umwandeln des Spektrums in mindestens einen Getreideparameterwert; und
Mittel (14) zum Trennen des Getreides in zwei oder mehr Chargen als Reaktion auf den gemessenen Parameterwert,
**dadurch gekennzeichnet, dass** die Messstation (3) auf einem Getreideeinfüllschacht (2) montiert ist, wobei die Messstation (3) eine Sensoreinheit (7) aufweist, die an einer Seitenwand (20) des Getreideeinfüllschachts (2) montiert ist, ein Trichter (21) innerhalb des Getreideeinfüllschachts (2) montiert ist, wobei der Trichter (21) verjüngte Trichterseitenwände (23, 24) umfasst, die nach außen von der Seitenwand (20) des Getreideeinfüllschachts (2) vorstehen, an der die Sensoreinheit (7) montiert ist, eine abgewinkelte Führungsklappe (27) zwischen den Trichterseitenwänden (23, 24) verläuft und von der Schachtseitenwand (20) beabstandet ist, an der die Sensoreinheit (7) montiert ist, wobei die abgewinkelte Führungsklappe (27) von einem Einlass (29) des Trichters (21) nach innen in Richtung der Schachtseitenwand (20) verjüngt ist, an der die Sensoreinheit (7) montiert ist.

3. Vorrichtung (1) nach Anspruch 2, wobei die abgewinkelte Führungsklappe (27) zwischen einem Einlassende (31) und einem Auslassende (32) der abgewinkelten Führungsklappe (27) gekrümmt ist.

4. Vorrichtung (1) nach Anspruch 2 oder Anspruch 3, wobei die Auslassenden der verjüngten Trichterseitenwände (23, 24) mit einem Trichterhalsabschnitt (25) verbunden sind, der parallele Halswände (33, 34) aufweist, die sich von jeder Trichterseitenwand (23, 24) nach außen erstrecken.

5. Vorrichtung (1) nach Anspruch 4, wobei ein Auslassende (32) der abgewinkelten Führungsklappe (27) teilweise in den Trichterhalsabschnitt (25) zwischen den Halswänden (33, 34) verläuft.

## Revendications

1. Processus d'analyse en ligne de quantités de grains en vrac et de séparation de grains en lots, chaque lot correspondant à au moins une valeur de paramètre de grain présélectionnée, le traitement comportant :
l'acheminement continu des grains devant une station de mesure en ligne (3),
l'analyse des grains en émettant de la lumière sur les grains qui passent par la station de mesure en ligne (3) et en détectant la lumière réfléchie par les grains pour fournir un spectre de grain,
la conversion du spectre en la ou chaque valeur de paramètre, et
la séparation des grains en ligne en lots en fonction de la ou de chaque valeur mesurée de paramètre de grain,
le processus comportant la commande du flux de grains à travers la station de mesure (3) pour former une couche de grains optiquement dense au niveau de la station de mesure (3) pour réfléchir la lumière émise sur les grains,
**caractérisé en ce que** le processus comporte la mise en entonnoir des grains pour acheminer les grains dans un flux de couche de grains optiquement dense devant une unité de capteur (7) à la station de mesure (3), l'acheminement des grains à travers une goulotte d'alimentation (2) ayant l'unité de capteur (7) montée au niveau d'une paroi latérale (20) de la goulotte d'alimentation (2) à la station de mesure (3), le fait de faire passer les grains délivrés par la goulotte d'alimentation (2) à travers un entonnoir (21) monté sur la paroi latérale (20) au niveau de l'unité de capteur (7), la formation de la couche de grains optiquement dense au moyen de l'entonnoir (21) et l'acheminement des grains dans un flux de couche de grains optiquement dense contre la paroi latérale (20) devant une tête de détection de l'unité de capteur (7) montée sur la paroi latérale (20), la canalisation des grains entre les parois latérales effilées de l'entonnoir (23, 24) faisant saillie vers l'extérieur à partir de la paroi latérale (20) de la goulotte d'alimentation en grains (2) au niveau de laquelle l'unité de capteur (7) est montée et entre un volet de guidage angulaire (27) et la paroi latérale de la goulotte (20), le volet de guidage angulaire (27) s'étendant entre les parois latérales de l'entonnoir (23, 24) et à distance de la paroi latérale de la goulotte (20) au niveau de laquelle l'unité de capteur (7) est montée, ledit volet de guidage angulaire (27) étant effilé vers l'intérieur à partir d'une entrée (29) de l'entonnoir (21) vers la paroi latérale de la goulotte (20) sur laquelle l'unité de capteur (7) est montée.

2. Appareil (1) pour analyser en ligne des quantités de grains en vrac et séparer les grains en deux lots ou plus en réponse à au moins une valeur de paramètre de grain détectée, l'appareil comprenant :
une station de mesure (3) dotée d'une unité de capteur (7) ;
un moyen (21) pour acheminer les grains devant l'unité de capteur (7) dans une couche de grains optiquement dense ;
un émetteur de lumière au niveau de la station de mesure (3) capable d'émettre de la lumière sur la couche de grains optiquement dense pour qu'elle soit réfléchie en retour vers l'unité de capteur (7) ;
l'unité de capteur (7) pour détecter la lumière réfléchie par les grains afin de fournir un spectre ;
un moyen (8) pour convertir le spectre en au moins une valeur de paramètre de grain ; et
un moyen (14) pour séparer les grains en deux lots ou plus en réponse à la valeur de paramètre mesurée,
**caractérisé en ce que** la station de mesure (3) est montée sur une goulotte d'alimentation en grains (2), la station de mesure (3) ayant une unité de capteur (7) montée au niveau d'une paroi latérale (20) de la goulotte d'alimentation en grains (2), un entonnoir (21) monté à l'intérieur de la goulotte d'alimentation en grains (2), l'entonnoir (21) comprenant des parois latérales effilées d'entonnoir (23, 24) faisant saillie vers l'extérieur à partir de la paroi latérale (20) de la goulotte d'alimentation en grains (2) au niveau de laquelle l'unité de capteur (7) est montée, un volet de guidage angulaire (27) s'étendant entre les parois latérales de l'entonnoir (23, 24) et à distance de la paroi latérale de la goulotte (20) au niveau de laquelle l'unité de capteur (7) est montée, ledit volet de guidage angulaire (27) étant effilé vers l'intérieur à partir d'une entrée (29) de l'entonnoir (21) vers la paroi latérale de la goulotte (20) sur laquelle l'unité de capteur (7) est montée.

3. Appareil (1) selon la revendication 2, dans lequel le volet de guidage angulaire (27) est incurvé entre une extrémité d'entrée (31) et une extrémité de sortie (32) du volet de guidage angulaire (27).

4. Appareil (1) selon la revendication 2 ou la revendication 3, dans lequel les extrémités de sortie des parois latérales effilées de l'entonnoir (23, 24) sont reliées à une partie col de l'entonnoir (25) ayant des parois de col parallèles (33, 34) s'étendant vers l'extérieur à partir de chaque paroi latérale de l'entonnoir (23, 24).

5. Appareil (1) selon la revendication 4, dans lequel une extrémité de sortie (32) du volet de guidage angulaire (27) s'étend partiellement dans la partie col de l'entonnoir (25) entre les parois du col (33, 34).
